# EUROPEAN PATENT APPLICATION

(11) **EP 0 851 677 A1**
(43) Date of publication of application: **01.07.1998**
(21) Application number: 97310427.6
(22) Date of filing: 22.12.1997
(51) Int. Cl.: H04N 5/44

(54) **Video signal processing apparatus and processing method**

(30) Priority: 26.12.1996 JP 348577/96
(71) Applicant: SONY CORPORATION, Tokyo (JP)
(72) Inventor: Tatehira, Yasushi, Shinagawa-ku, Tokyo (JP); Sarugaku, Toshio, Shinagawa-ku, Tokyo (JP); Senda, Tetsuya, Shinagawa-ku, Tokyo (JP)
(74) Representative: Nicholls, Michael John

(57) **Abstract**

A scanning line number converting process and a process for doubling a speed of a field are performed by a field memory FM1. In a line interpolation logic, a conversion from an interlace scan to a sequential scan is executed by using an output of a motion calculating unit. An even number line and an odd number line are outputted from the line interpolation logic, a vertical filtering is performed by a vertical filter, and an interpolation is executed so as to obtain a natural image. As mentioned above, an output image signal in which an aspect ratio of a double field frequency was converted is formed.

## Description

The invention relates to video signal processing apparatus and processing method which are applied to process a television signal of, for example, a PALplus system and, more particularly, to a video signal processing apparatus which improves a performance of a flicker free process to improve a flicker of a large area and, further, simultaneously execute a process for improvement of a picture quality realized by using a field memory, thereby reducing the number of memories which are used in a whole system.

The flicker free process is known as a technique to imprcve a large-area flicker due to a vertical scanning frequency of 50 Hz of the PAL system and is used in many PAL system television receivers as a technique that is indispensable for realization of a high. picture quality. In recent years, in association of the realization of a large integration of a memory, a model having a memory to remove a line flicker in addition to the flicker free process has been proposed. According to this model, the line flicker is removed by using a median filter and a field to be inserted between the existing fields is formed by a field double speed conversion.

In Europe, the PALplus system in which a wide aspect ratio of an image and a high resolution are accomplished while maintaining a compatibility with the PAL (Phase Alternation by line) system as an existing broadcasting system is being put into practical use through an experimental broadcasting. In a PALplus system television receiver for decoding the PALplus system, by performing a scanning line interpolating process, necessary information is extracted and a broadcasting signal is demodulated. In order to improve separating characteristics of a luminance and a chrominance signal, the picture quality is improved by what is called a 3-dimensional Y/C separating technique using a field memory. The flicker free process is also used in many PALplus system television receivers.

Although the present invention is suitable when it is applied to a whole video signal processing apparatus, explanation will now be made with respect to a PALplus system television receiver which is being put into practical use as an example of the video signal processing apparatus. An outline of the PALplus system television receiver has been disclosed in "The Trend of a New Generation Television System in Europe and U.S.A.", the magazine of The Institute of Television Engineers of Japan, Vol. 46, No. 3, pp. 276 - 283, 1992.

As disclosed in this literature, the PALplus system is based on the assumption that all of the next signal processes are executed. Those processes are a letter box conversion, a vertical reinforcement signal process, a motion adaptive Y/C encoding process, and a transmission of an identification (ID) signal and a reference signal. The three processes other than the transmission of the ID signal and the reference signal are switched in a camera mode for handling an image of a television camera and a film mode for handling an image of a movie film accordance with the kind of signal source. In the camera mode, there are 50 fields/sec. In the film mode, there are 25 frames/sec.

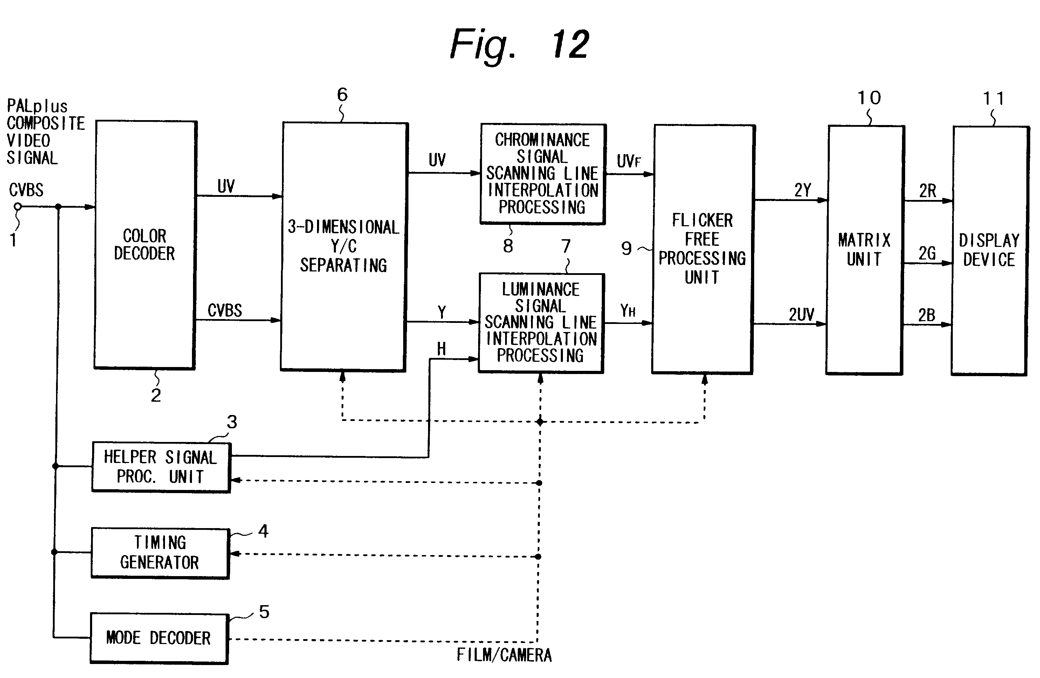

An outline of a PALplus system television receiver to which the invention can be applied will now be described with reference to Figs. 12 to 19. In Fig. 12, a composite video signal CVBS of the PALplus system converted into a digital signal is supplied to an input terminal shown at 1.

The inputted PALplus composite video signal CVES is supplied to a color decoder 2, a helper signal processing unit 3, a timing generator 4, and a mode decoding unit 5. The color decoder 5 extracts a band included in a color carrier from the composite video signal CVBS by a simple band pass filter and executes a color demodulation. A cross color component is mixed in a chrominance signal UV demodulated in this portion. The chrominance signal UV and composite video signal CVBS are supplied to a 3-dimensional Y/C separating unit 6 for separating a luminance signal (Y) and a color difference signal (C) on the basis of a color plus process.

In the 3-dimensional Y/C separating unit 6, the luminance signal Y is extracted from the composite video signal CVBS which is sent after it was subjected to a 3-dimensional pre-combing on the transmission side by using a 3-dimensional filter using a field memory corresponding to the characteristics on the transmitting side. The cross color component is also removed from the color difference signal derived from the color decoder 2 at the front stage by using a similar construction.

The helper signal processing unit 3 executes a demodulation of a reinforcement signal that is modulated by a chrominance carrier signal in upper and lower non-picture portions of the PALplus composite video signal CVBS and is transmitted and an adjustment of an amplitude. In the specification, the reinforcement signal subjected to this process is called a helper signal. The timing generator 4 generates various timing signals necessary for the PALplus system television receiver and outputs. The mode decoder 5 decodes an identification control signal WSS multiplexed to a vertical blanking portion (the 23rd line) and transmits necessary information to each section.

The chrominance signal UV from the 3-dimensional Y/C separating unit 6 is supplied to a chrominance signal scanning line interpolation processing unit 8. The chrominance signal scanning line interpolation processing unit 8 converts a main picture plane comprising 215 scanning lines per field into a picture plane comprising 287 scanning lines, which number is 4/3 times as large as 215. The luminance signal Y and a helper signal H from the 3-dimensional Y/C separating unit 6 are supplied to a luminance signal scanning line interpolation processing unit 7. The luminance signal scanning line interpolation processing unit 7 converts the main picture plane comprising 215 scanning lines per field into the luminance signal comprising 287 scanning lines by a process in the field together with luminance information possessed by 72 helper signals which are transmitted in a non-picture portion.

The luminance signal Y from the luminance signal scanning line interpolation processing unit 7 and the chrominance signal UV from the chrominance signal scanning line interpolation processing unit 8 are supplied to a flicker free processing unit 9. The flicker free processing unit 9 executes a field double speed converting process to the luminance signal Y of (16 : 9) and chrominance signal UV comprising 287 scanning lines per field obtained by the chrominance signal scanning line interpolation processing unit 8 and luminance signal scanning line interpolation processing unit 7, respectively. Thus, a frequency of 50 fields per second is converted into a field frequency (double speed field frequency) of 100 fields per second. By the flicker free processing unit 9, the large area flicker due to the field frequency of 50 Hz is eliminated.

An output of the flicker free processing unit 9 is supplied to a matrix unit 10. In the matrix unit 8, video signals 2Y and 2UV of a double speed field outputted from the flicker free processing unit 9 are converted into RGB signals 2R, 2G, and 2B to be supplied to a display device 11 such as a CRT.

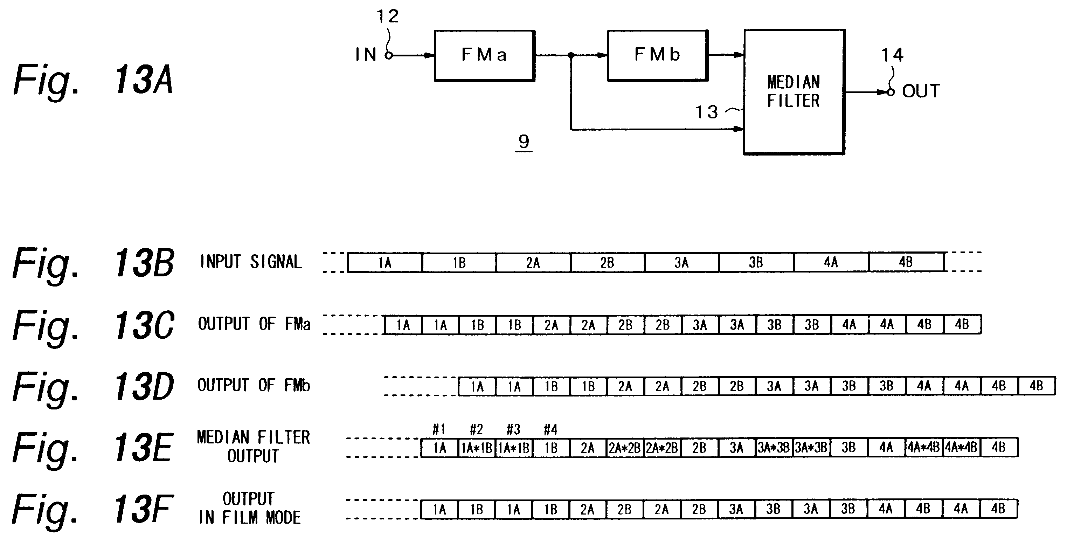

The general television receiver of the PALplus system is constructed as mentioned above. In case of the PAL system or PALplus system, the field frequency is equal to 50 Hz and in case of an image of a large area, there is a case where the flicker is visually recognized. Therefore, a flicker free to realize a high picture quality by eliminating the flicker has been known. The flicker free is fundamentally accomplished by converting the field frequency to 100 Hz. An outline of the flicker free process of the receiver will now be described with reference to Fig. 13.

Fig. 13A shows a construction of the flicker free processing unit 9. Fig. 13B shows an input video signal in each field. Fig. 13C shows an output video signal of an A field. Fig. 13D shows an output video signal of a B field. Fig. 13E shows an output in an ordinary process (camera mode in the ordinary PAL system or the PALplus system). Fig. 13F shows an output in the film mode of the PALplus system.

As shown in Fig. 13A, the video signal from an input terminal 12 is supplied to a median filter 13 through a serial connection of field memories FMa and FMb. An output of the field memory FMa is supplied to the median filter 13. The median filter 13 simultaneously receives the video signals of two fields which are continuous with respect to the time and outputs a pixel of a half value of a plurality of input pixels to an output terminal 14.

Figs. 13B to 13F are timing charts showing the operation of the construction of Fig. 13A. Fig. 13B shows the input video signal in each field. Fig. 13C shows the output video signal of the field memory FMa. Fig. 13D shows the output video signal of the field memory FMb. Fig. 13E shows the output in the process by the median filter. Fig. 13F shows the output in the film mode.

When the video signal [for example, the luminance signal Y and each pixel (sample) consists of 8 bits] shown in Fig. 13B is inputted from the input terminal 12, the field memory FMa outputs the video signal read out at the double speed field frequency as shown in Fig. 13C. This output is inputted to the field memory FMb and is delayed by a period of time of one field as shown in Fig. 13D. The video signals from the field memories FMa and FMb are simultaneously inputted to the median filter 13. The proper output is selected by the video signals of the A field and B field and the line flicker is eliminated. The A field denotes the first field between the two fields which are continuous with respect to the time. The B field denotes the second field.

As will be understood from the output of the median filter 13 shown in Fig. 13E, in the ordinary median filtering process, a signal 1A (signal of the A field of the double speed) is outputted as it is in a double speed field #1. In double speed fields #2 and #3, the signals 1A and 1B are processed by the median filter 13 and are outputted as a signal of 1A*1B. In a double speed field #4, the signal 1B is outputted as it is. As for the output in the film mode of the PALplus system, since the time-dependent contents of the A field and B field are the same, the process by the median filter 13 is unnecessary and the signals are alternately read out as they are as shown at 1A, 1B, 1A, 1B, 2A, 2B, 2A, and 2B. This state is shown in Fig. 13F.

The process of the median filter 13 converts an interlace scan to a non-interlace scan. For example, in the field #2, an intermediate value among total three pixels of two pixels (field 1B) existing at the upper and lower positions of the position of the pixel on a line to be interpolated and one pixel (field 1A) at this position is selected as an output pixel. As mentioned above, by raising the field frequency to the double frequency, the flicker can be eliminated. In case of performing the median filtering process in the flicker free process, since it is necessary to mix the A field and the B field and to execute the filtering process, field memories of two fields such as field memory FMa and field memory FMb are necessary.

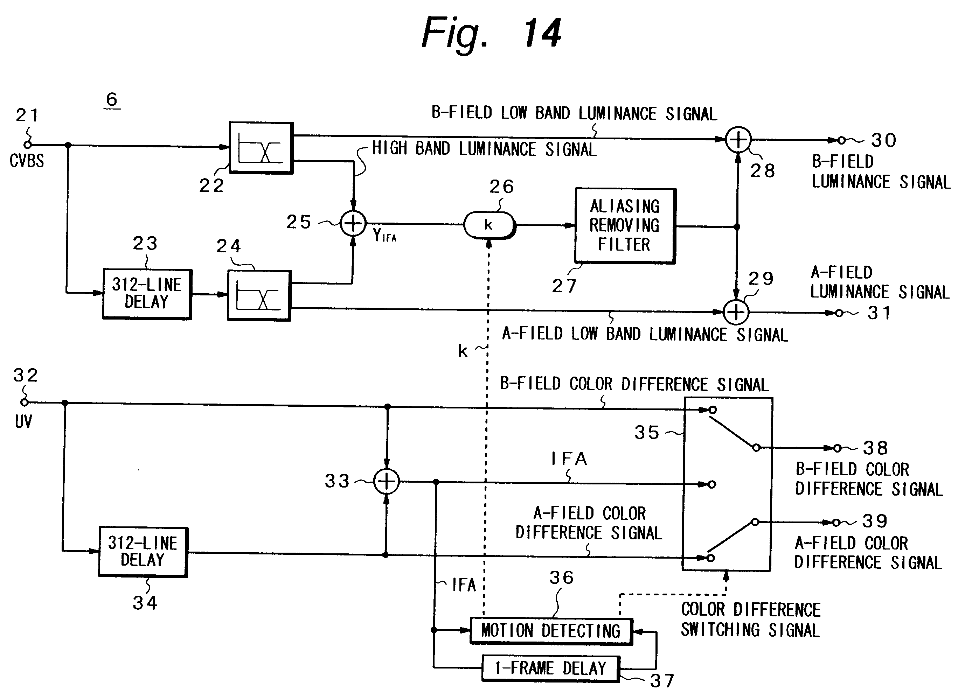

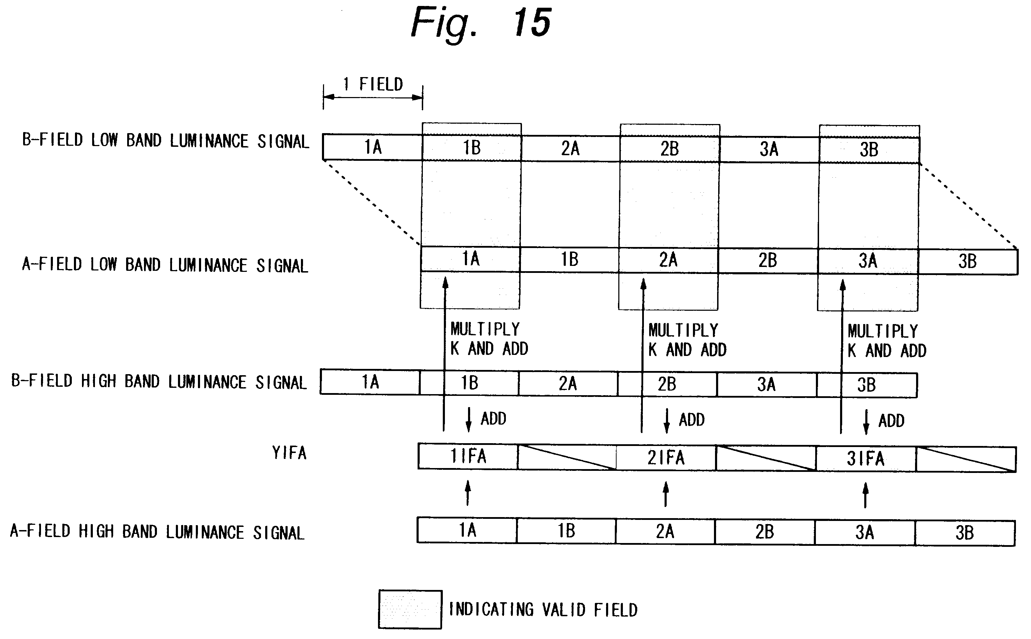

A Y/C separating process based on the color plus process will now be described with reference to Figs. 14 and 15. Fig. 14 shows a construction of an example of the 3-dimensional Y/C separating unit 6 of the PALplus receiver. The composite video signal CVBS (for example, 8 bits) from an input terminal 21 is inputted to a band dividing filter 22 and a field (312 lines) memory 23. In the band dividing filter 22, the signal is divided into a low frequency region including no chrominance carrier signal and a high frequency region including it. In case of the composite video signal CVBS of the PAL system, a boundary of those bands is set to about 3 MHz.

The composite video signal CVBS inputted to the field memory 23 is delayed by a time of 312 lines and, after that, it is supplied to a band dividing filter 24. The filter 24 is a band dividing filter having characteristics similar to those of the filter 22. High band components of the composite video signal CVBS extracted to outputs of the band dividing filters 22 and 24 are added by an adder 25. By the addition, the chrominance carrier signals included in the high band of the composite video signal CVBS are mutually set off, so that an intraframe high band luminance signal Y_{IFA} is derived. This is a 3-dimensional Y/C separating technique using a principle such that a correlation between the luminance signals which are away from each other by 312 lines in the same frame is high and the phases of the carrier chrominance signals are different by 180° in the PAL system.

In an image of a strong motion, since the nature of the foregoing PAL video signal is not satisfied, an interference component leaks into the high band luminance component obtained by the addition. In order to make the interference component inconspicuous, a coefficient K is multiplied by a coefficient device 26 in accordance with a motion amount, thereby attenuating the high band luminance component. A method of detecting the motion amount will be explained hereinlater.

The high band luminance component adjusted to an amplitude according to the motion amount by the coefficient device 26 is supplied to an aliasing removing filter 27. The signals of different fields are added by the adder 25, so that a continuity of an oblique line is not smooth. To reduce this problem, the aliasing removing filter 27 is provided.

The high band luminance component from the aliasing removing filter 27 is supplied to adders 28 and 29. In the adder 28, the high band luminance component and a B field low band luminance signal from the band dividing filter 22 are added. In the adder 29, the high band luminance component and an A field low band luminance signal from the band dividing filter 24 are added. A luminance signal of the B field is extracted to an output terminal 30 from the adder 28. A luminance signal of the A field is extracted to an output terminal 31 from the adder 29.

The color difference signal UV from an input terminal 32 is supplied to an adder 33 and a field (312 lines) memory 34. An output of the memory 34 is supplied to the adder 33. The inputted color difference signal UV (called a B field color difference signal) and a color difference signal (called an A field color difference signal) from the memory 34 are added by the adder 33. An intraframe average color difference signal IFA is derived from the adder 33. By this process, the luminance component mixed to the color difference signal can be eliminated. This process is based on a principle similar to the process to eliminate the carrier chrominance signal from the foregoing luminance high band component.

If this process is executed in an image having a strong motion, an interference component occurs. Therefore, the intraframe average color difference signal IFA, the A field color difference signal, and the B field color difference signal are switched by a color difference output switch 35 in accordance with the motion amount, thereby obtaining the A field color difference signal output and the B field color difference signal output.

A method of measuring the motion amount will now be briefly explained. The intraframe average color difference signal IFA is supplied to a motion detecting unit 36 and a 1-frame delay 37. In the motion detecting unit 36, the attenuation coefficient K of the high band luminance signal and a color difference switch signal are formed by using the intraframe average color difference signal IFA and an intraframe average color difference signal IFA(-1) which was delayed by one frame on the basis of the algorithm specified in the PALplus specification.

The generation of the coefficient K and the switch signal will now be described with reference to a timing chart of Fig. 15. It is now assumed that the fields of the image sequentially arrive like 1A, 1B, 2A, 2E, ... as shown in Fig. 15 for the B field low band luminance signal. Since the A field low band luminance signal is the signal transmitted through the field memory 23, it is a signal obtained by delaying the B field low band luminance signal by one field. The high band luminance signal also has a similar relation.

Since the intraframe average high band luminance signal Y_{IFA} is a signal obtained by adding the high band luminance signals in the same frame as mentioned above, a correct result is obtained only in the field where the A field and the B field in the same frame simultaneously arrive. In consideration of this point, the intraframe average high band luminance signal Y_{IFA} is obtained every other field as shown by hatched regions 1IFA, 2IFA, 3IFA, ... in Fig. 15.

On the other hand, as for the low band luminance signal, in the field where the valid intraframe average high band luminance signal Y_{IFA} is obtained, for example, in the region 1IFA in the diagram, the A field low band luminance signal 1A and B field low band luminance signal 1B in the same frame are obtained. The high band luminance signal and the low band luminance signals are added by the adders 28 and 29, so that the valid luminance signals are obtained every other field. With respect to the color difference signal as well, the valid signals are also derived by similar processes.

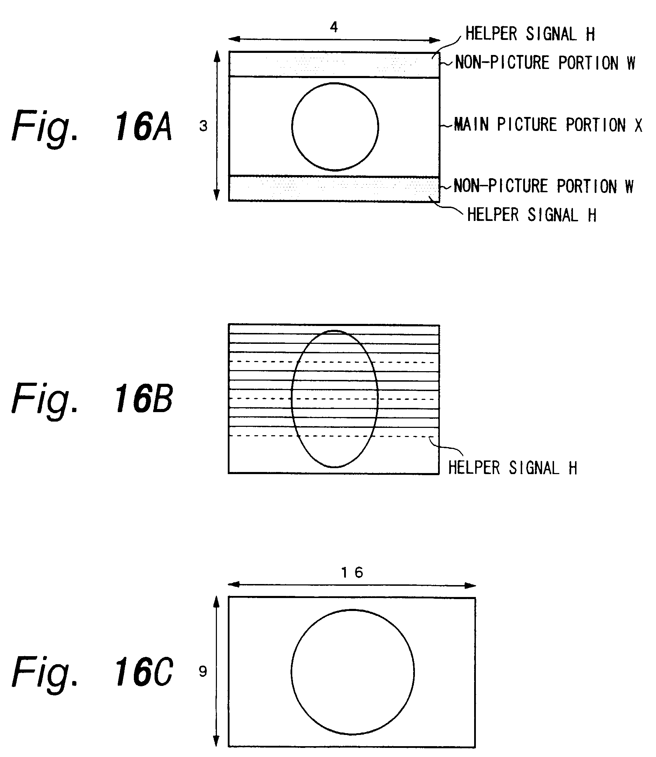

A scanning line interpolating process of the PALplus system television receiver will now be described with reference to Figs. 16 to 19. Fig. 16A is a diagram schematically showing a frame construction of the PALplus broadcasting signal. Fig. 16B is a diagram schematically showing an interleaving process of (3 : 1), which will be explained hereinbelow. Fig. 16C is a diagram showing a display example of an aspect ratio (16 : 9).

As shown in Fig. 16A, the PALplus broadcasting signal is made up of a main picture portion X and non-picture portions W arranged at the upper and lower positions of the main picture portion X. The helper signal H to reinforce a vertical resolution has been multiplexed to the non-picture portion W. According to the PALplus system, the number of valid scanning lines is equal to 576, the number of scanning lines of the main picture portion X is equal to 430, and the number of scanning lines of the non-picture portion W is equal to 144. That is, on the transmitting side, a component signal in which an aspect ratio is equal to (16 : 9), the number of scanning lines is equal to 625, and the number of valid scanning lines is equal to 576 is vertically converted, thereby reducing the number of scanning lines into 3/4. Thus, the number of valid scanning lines is equal to 430.

In the film mode, the vertical conversion is performed on a frame unit basis. High band components of 430 ℓph (lines per height) or more are separated by a filtering process in the vertical direction, thereby forming the helper signal of the luminance signal. In the camera mode, the vertical conversion is executed on a field unit basis. High band components in a range from 215 to 288 ℓph are separated by the filtering process in the vertical direction, thereby forming the helper signal of the luminance signal.

In the PALplus system television receiver, a process using a memory is performed in order to interpolate the number of valid scanning lines from 430 to 576. That is, as shown in Fig. 16B, information of the helper signal H of one line as much as one line is inserted into the picture plane having the aspect ratio (4 : 3) every three lines of the information of the main picture portion X. For example, after the information of the main picture portion X corresponding to lines 1 to 3 was inputted, the information in the helper signal H as much as one line is inserted. Similarly, information of the main picture portion X as much as three lines and information in the helper signal H as much as one line are inserted. This process is called an interleaving process.

Further, as shown in Fig. 16C, the image which was interleave processed is subjected to a filtering process by vertical filtering means, so that a wide image having an aspect ratio of (16 : 9) can be reconstructed and the helper signal H can be extracted. That is, a viewer (user) who possesses a receiver of a wide screen of (16 : 9) can reproduce a wide image by performing the decoding process as mentioned above. On the other hand, the user who possesses the existing receiver having an aspect ratio of (4 : 3) can reproduce an image as it is by a letter box form as shown in Fig. 16A.

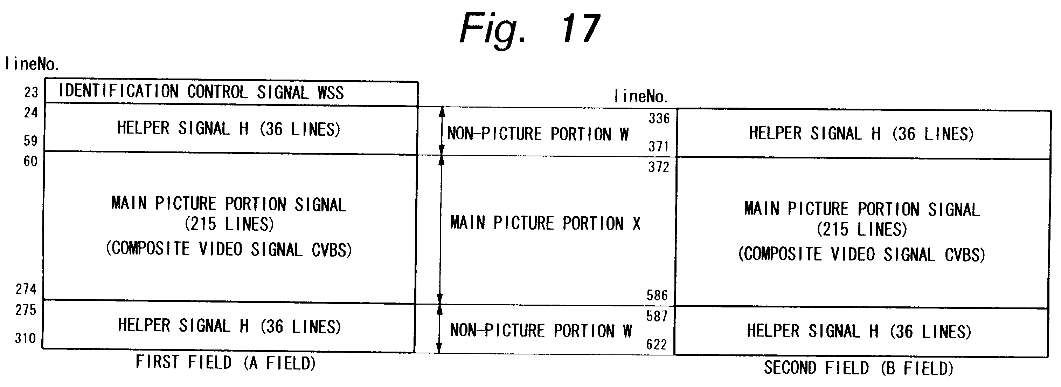

The details of a frame construction of a PALplus broadcasting signal will now be described with reference to Fig. 17. As shown in Fig. 17, the first field of the broadcasting signal of the PALplus system is constructed by the main picture portion X consisting of 215 lines and the non-picture portions W which exist at the upper and lower positions of the main picture portion X and each of which consists of 36 lines. The PALplus broadcasting signal, a mode signal, which will be explained hereinafter, and an identification control signal (WSS signal) to detect the presence or absence of a 3-dimensional pre-combing or the like have been inserted in the 23rd line in an invalid picture plane. The composite video signal made up of the (215 lines/field) scanning lines of an aspect ratio of (16 : 9) is transmitted in the main picture portion X of the PALplus broadcasting signal. The helper signal as a reinforcement signal to reinforce the vertical resolution of the luminance signal of the main picture portion X is transmitted in the non-picture portion W each comprising 36 scanning lines existing at the upper and lower positions of the main picture portion X. The second field is also similarly constructed.

In the PALplus system television receiver, the luminance signal of (16 : 9) consisting of (287 lines/field scanning lines is formed from the signal of total 287 scanning lines of the luminance signal (215 lines/field) of the main picture portion X and the helper signals (72 lines/field in the upper and lower signals). With respect to the color difference signal, an image of (16 : 9) comprising (287 lines/field) scanning lines is similarly obtained from the chrominance signal (215 lines/field) of the main picture portion.

Although such an interpolating process is performed on a frame unit basis, in case of an image (motion image or the like) in which the images of the first field and second field largely differ in one frame, if the interpolating process is performed on a frame unit basis, a picture quality is largely deteriorated. Therefore, in the PALplus system, a mode signal (1 bit) indicative of the correlation between two fields is multiplexed into the identification control signal WSS, thereby enabling a certain process to be performed. In case of the foregoing film mode, since the images in the A field and B field are the same, there is a correlation between two fields. In case of the camera mode, there is no correlation between two fields. In the film mode, an intraframe interpolation is executed by using the images of the A field and B field in the same frame. An image due to a telecine in which an original image comprises 24 frames/second or the like corresponds to it. In the camera mode, an intrafield interpolation is executed by using the scanning lines of one field.

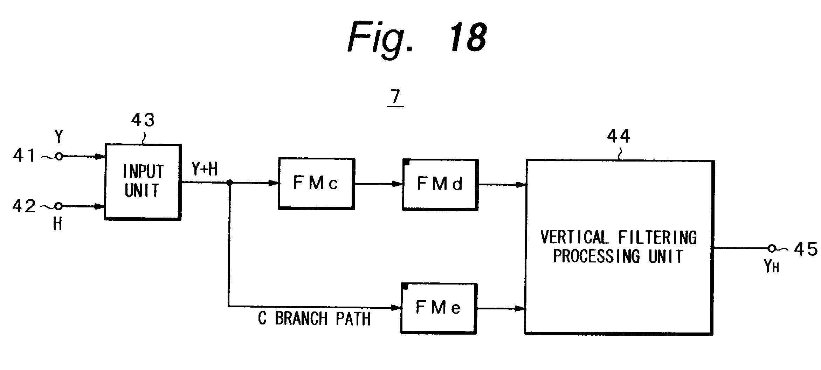

An outline of the luminance signal scanning line interpolation processing unit 7 of the PALplus system television receiver will now be described with reference to Fig. 18. As shown in Fig. 18, the luminance signal scanning line interpolation processing unit 7 is constructed by input terminals 41 and 42, an input unit 43, field memories FMc, FMd, and FMe, a vertical filtering processing unit 44, and an output terminal 45. The luminance signal Y and the helper signal H multiplexed to the non-picture portion are supplied from the input terminal 41. The interleaving process of (3 : 1) mentioned above is executed by the field memories FMc, FMd, and FMe. The field memory FMc is provided for a delay of one field and is made up of, for instance, an FIFO. Each of the field memories FMd and FMe is constructed by a memory which can be accessed at random on a line unit basis. The reason why the field memories FMc, FMd, and FMe of three fields are necessary is to execute the interpolating process corresponding to each of the foregoing film mode and camera mode.

In the construction of Fig. 18, the luminance signal Y and helper signal H are inputted to the input unit 43. In the input unit 43, the helper signal H is multiplexed to the non-picture portion of the luminance signal Y and a digital luminance signal Y + H is formed by an A/D conversion. The signal Y + H (for example, digital signal of 8 bits) from the input unit 43 is inputted to the field memory FMc serving as a 1-field delay element to perform the intraframe interpolation in the film mode in which a still image or a movie source is mainly handled.

The video signal delayed in the field memory FMc is inputted to the field memory FMd. On the other hand, the present field is inputted to the field memory FMe. Therefore, when the video signal of the fields (1A, 1B, 2A, 2B, ...) is supplied to the field memory FMe, the video signal of (/, 1A, 1B, 2A, 2B, ...) which was delayed by one field is supplied to the field memory FMd.

That is, the A field and B field in the same frame are simultaneously written into the field memory FMd and field memory FMe. The video signals of the A and B fields in the same frame are subjected to an interleaving process of the luminance signal and the helper signal at the time of reading from the field memories FMd and FMe, respectively. When reading in the film mode, the same contents are read out from the field memories FMd and FMe for a 2-field period of time. Thus, in the film mode, the vertical filtering processing unit 44 calculates an output of each field by using the information of the scanning lines of both of the A and B fields. The vertical filtering processing unit 44 executes a process such as to smooth the image by assuring a continuity of the image which was lost by the interleaving process by multiplying a coefficient every line and executing adding processes as many as a few lines.

In the camera mode in which a motion image is handled, the input video signal is inputted to the field memory FMe through a branch C and is subjected to an interleaving process by the field memory FMe. The video signal from the field memory FMe is inputted to the vertical filtering processing unit 44 at the next stage. In the vertical filtering processing unit 44, by executing the vertical filtering process using the video information as much as one field, necessary image information is outputted to the output terminal 45.

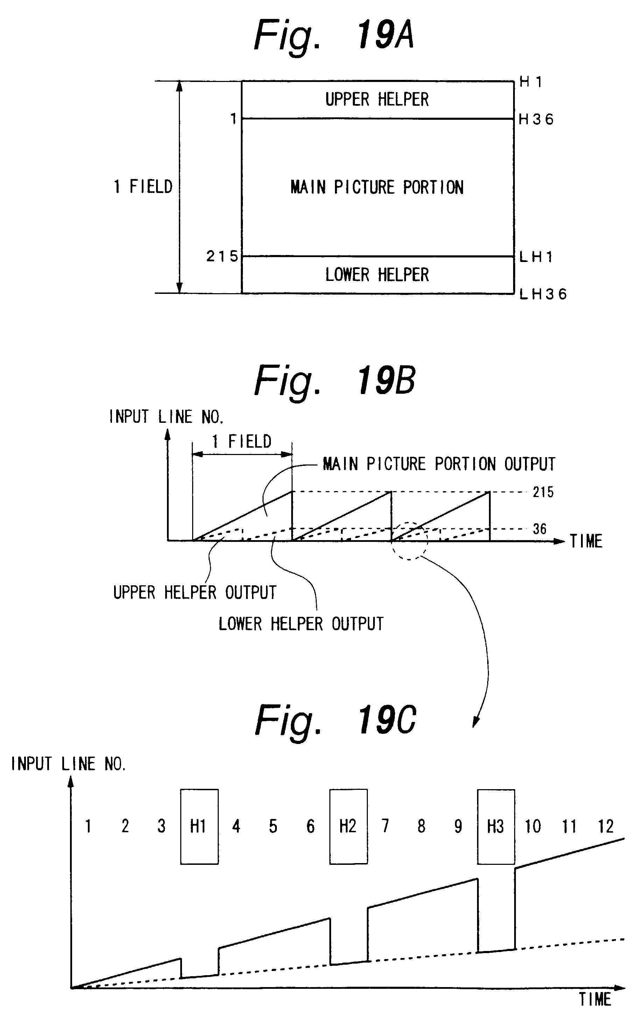

Fig. 19A shows a definition of line numbers in schematic diagrams shown in Figs. 19B and 19C. In the other diagrams which are referred to hereinbelow, in case of schematically showing a memory control, it is expressed on the basis of this definition. A solid line in Fig. 19B shows a state in which the main picture portion was interleave processed and a broken line schematically shows a state in which the helper signal was interleave processed. Fig. 19C shows an enlarged diagram of a leading portion in Fig. 19B. An axis of ordinate in the diagram shows the line number defined in Fig. 19A. That is, (main picture portion X: 1 ~ 215 lines, upper non-picture portion: H1 ~ 36, lower non-picture portion: LH1 ~ 36). An axis of abscissa indicates a time t.

As mentioned above, the interleaving process shown in Fig. 19B is performed in the field memories FMd and FMe. In Fig. 19B, the video signal of the main picture portion is outputted as shown by a solid line by the field memory. The helper signal is interleave processed as shown by a broken line and is outputted. The details of a portion surrounded by a circle o in Fig. 19 are shown in Fig. 19C. That is, after the information of the main picture portion X of lines 1, 2, and 3 was outputted, the helper signal of the H1 line is outputted and, subsequently, the main picture portion of three lines is outputted.

The reading and writing operations of the memory in the field memories FMd and FMe will now be described. In the film mode, the writing operation is performed to the FMd and FMe only in the field where the A field and B field in the same frame simultaneously arrive. As shown in Fig. 19B, the video signals of both fields are interleave processed by the FMd and FMe and the same contents are continuously read out for two fields. The reason why the same contents are read out for two fields is because in case of the film mode, the contents of the scanning lines of both of the A and B fields are necessary to calculate both outputs of the A and B fields. In the vertical filtering processing unit 44, by performing the vertical filtering process to the video information as much as two fields, the necessary image information is outputted to the output terminal 45.

In the camera mode, the video signal from the input unit 43 is inputted to the B field memory FMe through the branch C in Fig. 18 and is interleave processed. The video information is inputted to the vertical filtering processing unit 44 at the next stage. In the vertical filtering processing unit 44, by performing the vertical filtering process to the video information as much as one field, necessary image information is outputted to the output terminal 45. Although the luminance signal process has been described as an example, the scanning line interpolation is also executed with respect to the color difference signal by an almost similar process.

The median filter 13 (refer to Fig. 13) which is used in the flicker free processing unit 9 that is used in the foregoing conventional receiver has the following problems.
1) In case of a still image, the pixel of the other field is not always selected and a line flicker cannot be perfectly eliminated.
2) A reconstruction performance of an oblique line is low and an unnatural moire distortion occurs in a specified pattern (for example, monosco pattern).
3) In case of a motion image, the image of the other field is selected, so that there is a case where the motion becomes unnatural.

An application such that the field memories FMa and FMb are used in the flicker free processing unit 9 and a plurality of field memories are used even in the scanning line interpolation processing units 7 (refer to Fig. 18) and 8 and the 3-dimensional Y/C separating unit 6 (refer to Fig. 14) is installed. Thus, there are inconveniences such that the number of field memories increases and the costs of the whole system are extremely high.

The invention preferably provides a video signal processing apparatus and processing method which can improve a picture quality by improving a memory construction and a memory managing method of the video signal processing apparatus of the flicker free system.

The invention also preferably provides a video signal processing apparatus and processing method which can realize a 3-dimensional Y/C separation or a PALplus scanning line interpolating process by commonly using a memory used in a flicker free process and can reduce an amount of memories which are used in a whole system.

A video signal processing apparatus for converting an inputted video signal of an interlace system to a signal of a double field frequency and performing a scanning line number conversion, comprising:
memory means which stores said inputted video signal of the interlace system and from which the video signal is read out at a double field frequency;
motion detecting means for calculating a motion amount of an image every pixel on the basis of a difference in one frame of said inputted video signal of the interlace system; and
line interpolating means for forming a video signal of an interpolation line at an intermediate position between two scanning lines of said video signal of an interpolation line at an intermediate position between two scanning lines of said video signal of the interlace system converted to said double field frequency signal with reference to said calculated motion amount and converting the video signal of the interlace system to a sequential scanning signal,
wherein an even-number line and an odd-number line are outputted every field of said double field frequency on the basis of said line-interpolated sequential scanning signal.

A video signal processing method of converting an inputted video signal of an interlace system to a signal of a double field frequency and performing a scanning line number conversion, comprising the steps of:
converting said inputted video signal of the interlace system to a video signal of a double field frequency;
calculating a motion amount of an image every pixel on the basis of a difference in one field of said video signal converted to the signal of said double field frequency; and
converting the video signal of the interlace system to a sequential scanning signal by forming an interpolation line at an intermediate position of two scanning lines of said video signal of the interlace system converted to the signal of said double field frequency with reference to said calculated motion amount,
wherein an even-number line and an odd-number line are outputted every field of said double field frequency on the basis of said line-interpolated sequential scanning signal.

The video signal processing apparatus according to the foregoing invention, an interpolation field image of a high precision is formed by a motion adaptive process and improves the picture quality. The interlace image can be converted into a sequential scan by an interfield interpolation by a motion adaptive process and a zooming in the vertical direction of a high picture quality can be realized.

Hitherto, according to the invention, the process performed by using the field memories of total four fields of two fields in order to perform the 3-dimensional Y/C separation and two fields in order to perform the flicker free process can be executed by three fields. The picture quality can be further improved.

Moreover, in case of applying the invention to the PALplus system receiver, hitherto, the process executed by using the field memories of total five fields of three fields for the PALplus scanning line interpolation and two fields for the flicker free process can be performed by three fields. The picture quality can be further improved. The delay amount of the signal process which is not integer times as large as the field, which is hitherto a problem in such a kind of process, is not caused, so that it is also possible to connect to a home-use VTR or the like without any problem.

The invention will now be further described, by way of illustrative and non-limiting example, with reference to the accompanying drawings, in which:
Fig. 1 is a block diagram showing a main section of a PAL system television receiver to which the invention can be applied;
Fig. 2 is a block diagram showing the first embodiment of the invention;
Fig. 3 is a block diagram of an example of a line interpolation logic unit in the first embodiment of the invention;
Figs. 4A and 4B are schematic diagrams showing the operation of the line interpolation logic unit;
Figs. 5A, 5B and 5C are schematic diagrams showing a memory control method of the first embodiment of the invention;
Figs. 6A, 6B and 6C are schematic diagrams for explaining outputs from a noise reducer and field memories FM2 and FM3, a filtering in a vertical filter, and a state in which an output is selected from a vertical filter every field and is outputted;
Fig. 7 is a block diagram of the second embodiment of the invention;
Fig. 8 is a block diagram showing a 3-dimensional Y/C separating unit in detail in the second embodiment of the invention;
Fig. 9 is a block diagram showing the third embodiment of the invention;
Figs. 10A, 10B and 10C are schematic diagrams showing a method of performing a memory interleaving process of PALplus in the third embodiment of the invention;
Figs. 11A and 11B are schematic diagrams showing a method of memory control in the third embodiment of the invention;
Fig. 12 is block diagram showing a main section of signal processes of a conventional television receiver of the PALplus system;
Figs. 13A through 13F are block diagrams and timing chart for explaining a flicker free processing unit of the television receiver;
Fig. 14 is a block diagram of an example of a 3-dimensional Y/C separating unit of the television receiver;
Fig. 15 is a timing chart for explaining the operation of an example of the 3-dimensional Y/C separating unit;
Figs. 16A, 16B and 16C are schematic diagrams for explaining a scanning line interpolation processing unit of the television receiver;
Fig. 17 is a schematic diagram for explaining a frame construction of a PALplus broadcasting signal;
Fig. 18 is a block diagram of an example of a scanning line interpolation processing unit; and
Figs. 19A, 19B and 19C are timing charts showing the operation of an example of the scanning line interpolation processing unit.

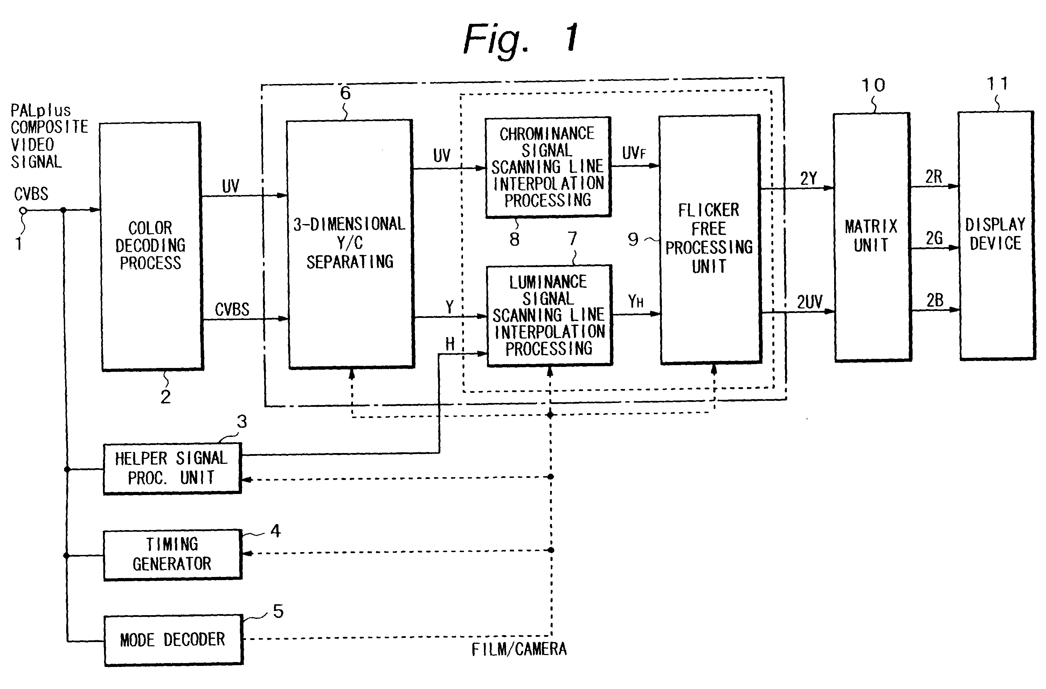

An embodiment of a PAL system television receiver according to the invention will now be described hereinbelow with reference to Figs. 1 to 11. First, a main section of a video signal processing apparatus of a PALplus system television receiver to which the invention can be applied will be described with reference to Fig. 1. It is similar to the construction of the conventional receiver shown in Fig. 12 mentioned above.

The PALplus composite video signal CVBS from the input terminal 1 is supplied to the color decoder 2, helper signal processing unit 3, timing generator 4 for forming various timings and outputting, and mode decoder 5 to identify the film mode/camera mode. The chrominance signal UV and composite video signal CVBS from the color decoder 2 are supplied to the 3-dimensional Y/C separating unit 6 to separate the luminance signal and the color difference signal on the basis of a color plus process.

The luminance signal Y from the 3-dimensional Y/C separating unit 6 and the helper signal H from the helper signal processing unit 3 are supplied to the luminance signal scanning line interpolation processing unit 7. The color difference signal UV from the 3-dimensional Y/C separating unit 6 is supplied to the chrominance signal scanning line interpolation processing unit 8. The luminance signal Y from the processing unit 7 and the color difference signal UV from the processing unit 8 are supplied to the flicker free processing unit 9.

The double speed luminance signal 2Y whose field frequency is doubled (100 Hz) and the double speed color difference signal UV which are outputted from the flicker free processing unit 9 are supplied to the matrix unit 10, so that double speed RGB signals 2R, 2G, and 2B are derived. The double speed RGB signals are supplied to the display device 11 such as CRT, liquid crystal, or the like.

The operation of the video signal processing apparatus of the PALplus system television receiver with the construction mentioned above will now be described. The PALplus composite video signal CVBS inputted from the input terminal 1 is inputted in parallel to the color decoder 2, helper signal processing unit 3, timing generator 4, and mode decoder 5. The 3-dimensional Y/C separating unit 6 connected to the color decoder 2 executes the Y/C separating process based on the color plus.

In the 3-dimensional Y/C separating unit 6 and luminance signal scanning line interpolation processing unit 7, the process corresponding to each mode is performed. In the film mode, as for the scanning line interpolation, an intraframe process is executed from the images of the A field and B field in the same frame and the Y/C separation is also performed in a motion non-adaptive manner. In the camera mode, two fields in the frame correspond to images at different timings, the Y/C separation is motion adaptive processed, and the scanning line interpolation is carried out by the intrafield process.

In the helper signal processing unit 3, the reinforcement signals which exist in the upper and lower non-picture portions of the PALplus composite video signal and are modulated by the chrominance carrier signal and are transmitted are demodulated and amplitude adjusted. The luminance signal Y outputted from the 3-dimensional Y/C separating unit 6 and the output (helper signal H) of the helper signal processing unit 23 are inputted to the luminance signal scanning line interpolation processing unit 7. In the timing generator 4, various timing signals which are necessary for the PALplus system television receiver are formed and outputted. Further, in the mode decoder 5, the identification control signal multiplexed to the vertical blanking portion (23rd line) is decoded and necessary information is transmitted to each section. That is, a mode identification signal formed by the mode decoder 5 is supplied to the 3-dimensional Y/C separating unit 6, helper signal processing unit 3, timing generator 4, luminance signal scanning line interpolation processing unit 7, and flicker free processing unit 9.

In the chrominance signal scanning line interpolation processing unit 8, the chrominance signal consisting of 215 lines per field is converted into the signal of 287 lines of 4/3 times by an intrafield scanning line interpolating process or the like and is outputted. No helper signal, however, is used in the chrominance signal scanning line interpolation processing unit 8. In the luminance signal scanning line interpolation processing unit 7, the video information of the main picture portion (mainly, luminance signal) consisting of 215 lines per field is converted into the luminance signal of total 287 lines by a memory serving as internal memory means or by memory control means together with the luminance signal of 72 lines of the helper signal that is interpolated into the non-picture portions and transmitted and is outputted. The luminance signal scanning line interpolation processing unit 7 has a vertical filter and forms an image in which the continuity of the image which was lost by the interleaving process was assured and the vertical high band component was reinforced by the helper signal and outputs.

The flicker free processing unit 9 executes a field double speed converting process to the luminance signal Y and color difference signal UV of (16 : 9) consisting of 287 lines per field derived by the luminance signal scanning line interpolation processing unit 7 and chrominance signal scanning line interpolation processing unit 8. The flicker free processing unit 9 converts into a double field frequency of 100 fields per second. Thus, a large area flicker that is caused due to the field frequency of 50 Hz is eliminated.

In the matrix unit 10, a field double speed signal 2Y and color difference signals 2Eu and 2Ev outputted from the flicker free processing unit 9 through an output unit 29 are converted into double speed RGB signals 2R, 2G, and 2B to input to the liquid crystal display apparatus and the display device such as a cathode ray tube (CRT) or the like and are outputted.

The construction and operation of the general PALplus system television receiver have been described above. The first and third embodiments of the invention are applied to the construction including the 3-dimensional Y/C separating unit 6, luminance signal scanning line interpolation processing unit 7, chrominance signal scanning line interpolation processing unit 8, and flicker free processing unit 9 shown by being surrounded by an alternate long and short dash line in Fig. 1. The second embodiment of the invention is applied to the construction including the luminance signal scanning line interpolation processing unit 7, chrominance signal scanning line interpolation processing unit 8, and flicker free processing unit 9 shown by being surrounded by a broken line in Fig. 1.

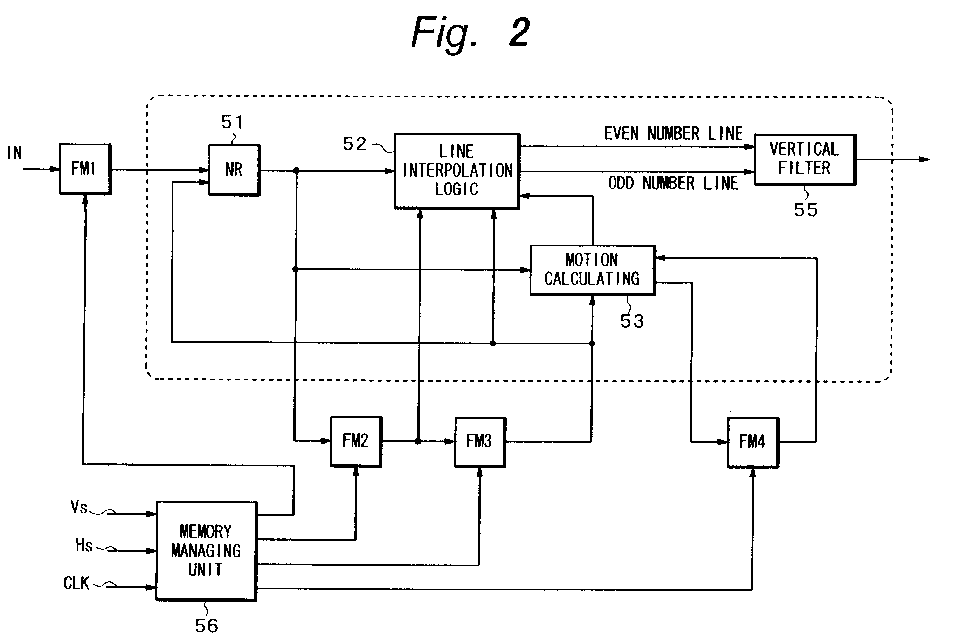

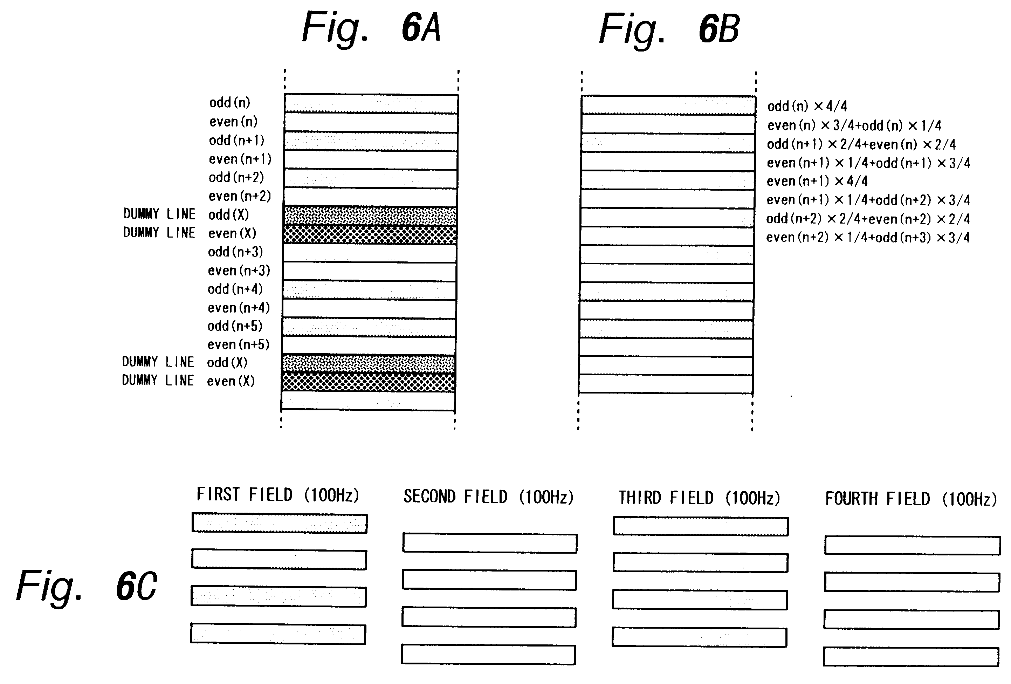

The first embodiment of the invention will now be described with reference to Figs. 2 and 6. Fig. 2 is a block diagram showing a main section (luminance signal processing unit) of the first embodiment of the invention. A signal processing apparatus shown in Fig. 2 is constructed by: a field memory FM1 to perform a scanning line number conversion and a flicker free process; a noise reducer 51 to perform a noise reducing process by two signals having a time difference of one frame; field memories FM2 and FM3 to perform a 1-field delay; a line interpolation logic unit 52; a motion calculating unit 53; a field memory FM4 to delay a motion amount by one field; a vertical filter 55 to perform a vertical filtering process to an output from the line interpolation logic unit 52; and a memory managing unit 56 to control the operations of the field memories FM1 to FM4.

A vertical sync signal Vs, a horizonal sync signal Hs, and a clock signal CLK which are synchronized with the input video signal are supplied to the memory managing unit 56. The memory managing unit 56 controls the writing/reading operations of each field memory and generates a write address and a read address of each field memory. A construction shown by being surrounded by a broken line in Fig. 2 can be realized by a DSP (digital signal processor) without limiting to a circuit block corresponding to each portion. In case of the DSP, by changing software, the second or third embodiment, which will be explained hereinlater, can be constructed.

The first embodiment is derived by applying the invention to a receiver of a type in which the process of the helper signal is not performed. Only the process of the luminance signal will be described for simplicity of explanation. A process similar to that of the luminance signal can be applied with respect to the chrominance signal. It is also possible to simplify the process in consideration of a sensitivity of a visual sensation system to the chrominance signal. Since the invention can be also applied to the construction in which the process of the helper signal is not performed, the invention can be also applied to a process of the normal PAL system video signal.

The first embodiment will be further described in detail. A digital signal (for example, each sample consists of 8 bits) of the luminance signal (vertical frequency is equal to 50 Hz, the number of lines is equal to 625, and 2 : 1 interlace) after completion of the Y/C separation is inputted from the 3-dimensional Y/C separating unit 6 to the field memory FM1. In the field memory FM1, a process to read out at the double field frequency and a process to convert the number of scanning lines as a pre-process to enlarge a center portion or the like of the image and display are executed. Those processes are similar to the interleaving process (Fig. 16) of the conventional scanning line interpolating process of the PALplus system. However, in the first embodiment, since the reinforcement signal of PALplus is unnecessary, any signal can be also inserted into the line of the helper.

The output whose speed was doubled from the field memory FM1 is inputted to the noise reducer 51. Therefore, in the output from the field memory FM1, one field is one field whose speed was doubled. An output of the noise reducer 51 is delayed by one frame (double speed frame) through the field memories FM2 and FM3 and is inputted to the noise reducer 51. The noise reducer 51 eliminates noise components without a correlation between the frames. Such a noise reducer 51 is known as a frame recursive type.

A signal transmitted through the noise reducer 51 and a signal transmitted through the field memory FM2 are inputted to the line interpolation logic unit 52. In the line interpolation logic unit 52, an interlace signal is converted into a sequential scan signal [non-interlace signal) by using an output from the noise reducer 51 (output of the field memory FM1), an output from the field memory FM2, an output from the field memory FM3, and a motion amount from the motion calculating unit 53. The line interpolation logic 52 outputs an even number line EL and an odd number line OL. The sequential scan signal output is formed by different methods in case of a still image and in case of a motion image. The motion calculating unit 53 detects the motion amount on a pixel unit basis.

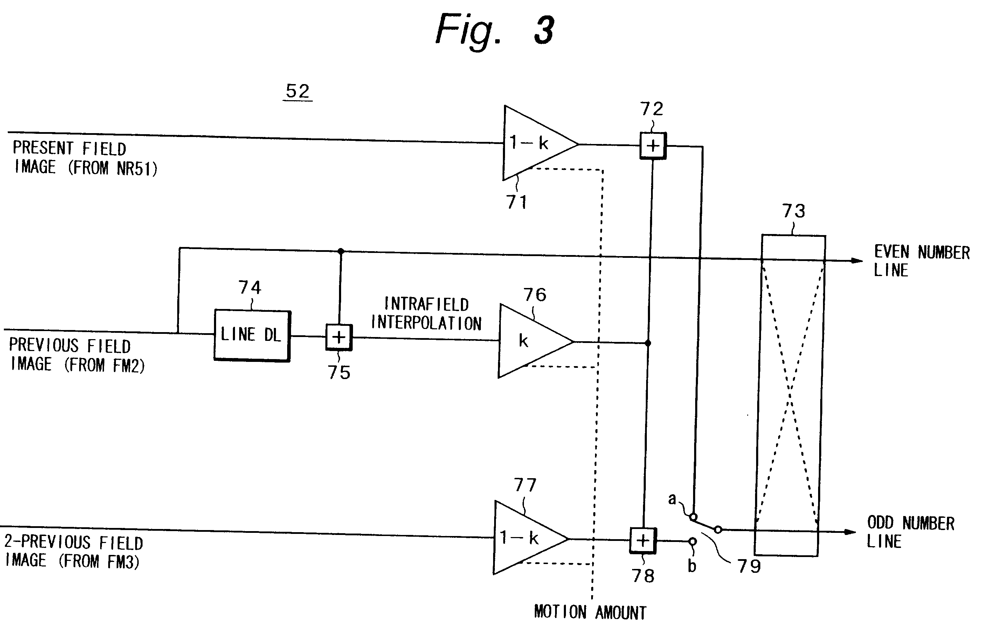

Fig. 3 shows a construction of an example of the line interpolation logic unit 52. The image of the present field which is outputted from the noise reducer 51 is supplied to an adder 72 through a coefficient device 71. The image of the previous field from the field FM2 is supplied to a switching circuit 73, a line delay (constructed by a line FIFO, for example) 74, and an adder 75. Pixels of the continuous lines of the previous field are added by the adder 75. Further, an addition output is reduced into 1/2. Therefore, an intrafield interpolation signal is taken out to an output of the adder 75. Therefore, the intrafield interpolation signal is supplied to a coefficient device 76.

The image of the two-previous field from the field memory FM3 is supplied to a coefficient device 77. An output of the coefficient device 77 is supplied to an adder 78. Outputs of the coefficient devices 71 and 76 are added by the adder 72. Outputs of the coefficient devices 76 and 77 are added by the adder 78. The coefficient device 76 multiplies an input by the coefficient K. The coefficient devices 71 and 77 multiply inputs by a coefficient (1 - K). As shown by a broken line in Fig. 3, the coefficient K changes in accordance with a motion amount from the motion amount calculating circuit 53. That is, when the motion amount is large, the coefficient K has a large value.

An output of the adder 72 is supplied to one input terminal (a) of a switching circuit 79. An output of the adder 78 is supplied to the other input terminal (b) of the switching circuit 79. An output of the switching circuit 79 is supplied to the switching circuit 73. The switching circuit 79 is selected so that the input terminal (a) is selected in the first and third fields and the input terminal (b) is selected in the second and fourth fields.

The switching circuit 73 has two inputs and two outputs. The two outputs correspond to an even number line and an odd number line. The switching circuit 73 selects the signal so as to output as an even number line and an odd number line as shown by a solid line in the first and second fields and selects the signal so as to output as an even number line and an odd number line as shown by a broken line in the third and fourth fields.

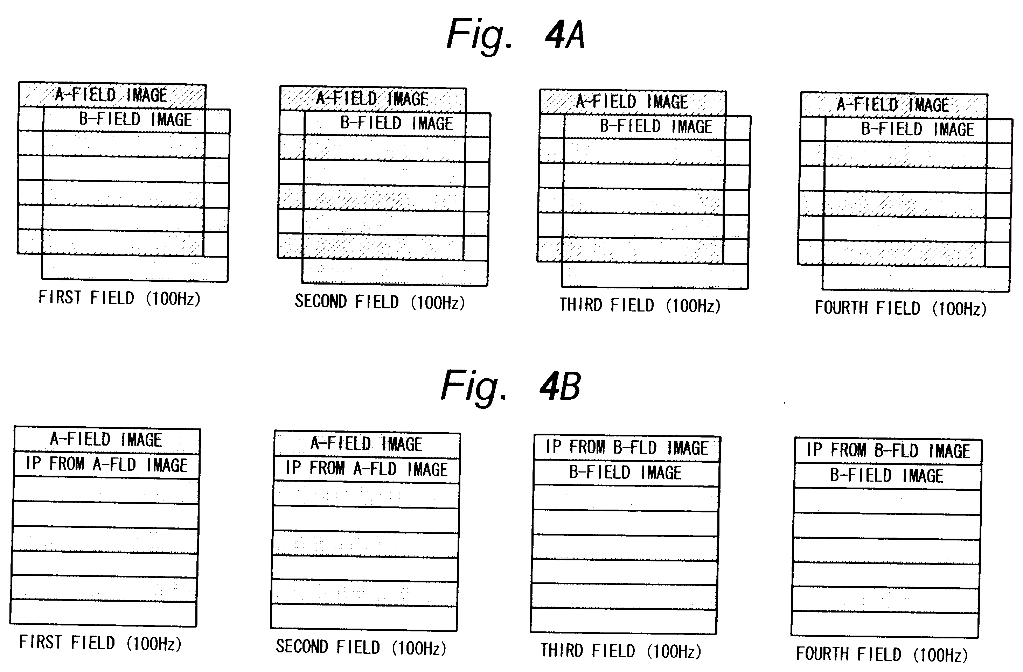

The operation of the line interpolation logic unit 52 will now be described with reference to Fig. 4. Fig. 4A shows a process in case of the still image. Fig. 4B shows a process in case of a motion image. For simplicity of explanation, in the diagrams, it is assumed that one field is made up of four lines (1, 3, 5, 7 and 2, 4, 6, 8) and one frame is made up of 8 lines.

In case of a still image, by overlapping the image of the A field and the image of the B field, the frame can be completed. Therefore, as shown in Fig. 4A, the A field image and the B field image are outputted as an odd number line and an even number line as they are. On the other hand, in case of a motion image, if the images of the A field and B field which are different with respect to the time are overlapped, a picture quality deteriorates. Therefore, as shown in Fig. 4B, the image of the A field from the field memory FM2 and the image (intrafield interpolation output from the adder 75) obtained by spatially interpolating the image of the A field are used in the first and second fields. The image of the B field from the field memory FM2 and the image (intrafield interpolation output from the adder 75) obtained by spatially interpolating the image of the B field are used in the third and fourth fields.

In the motion calculating unit 53, a difference between the frames of the image is calculated from an output of the noise reducer 51 and an output (image of the two-previous field) of the field memory FM3 is calculated. A motion amount in the relevant field is obtained in consideration of the differential value between the frames and the motion amount of the previous field from the field memory FM4. On the basis of the motion amount, as mentioned above, the coefficient K to specify the mixture ratio of the motion image and the still image is controlled. As will be presumed from the above description, in case of the film mode (there is no time-dependent difference between the A field and the B field) of the PALplus system, a processing method of the still image can be always used.

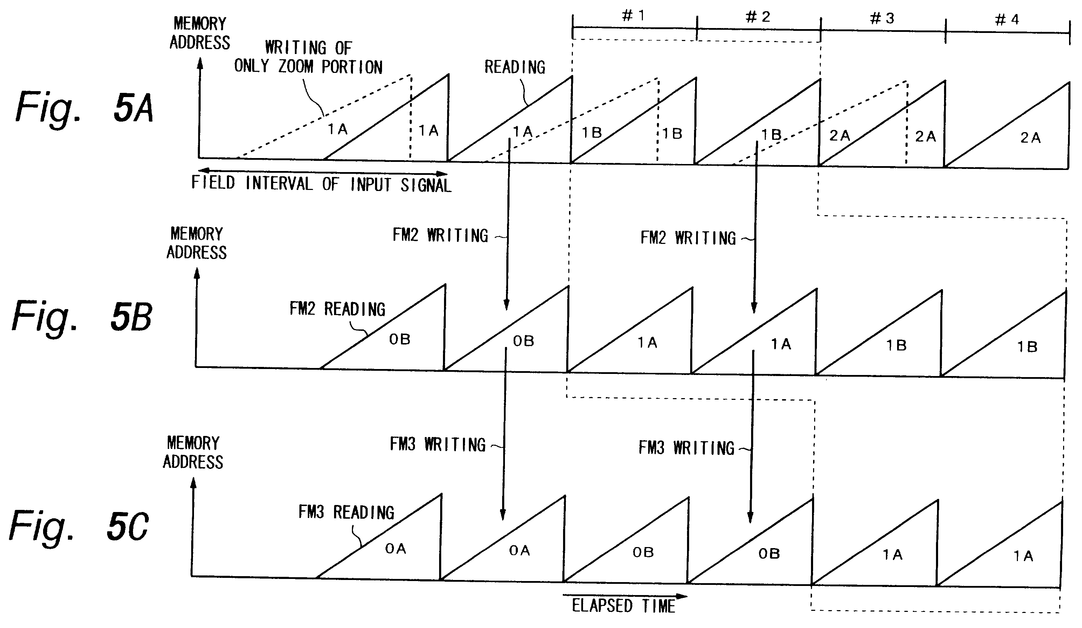

The operation of the memory will now be described with reference to Fig. 5. Fig. 5 schematically shows the operation of each memory. An axis of ordinate indicates a memory address and an axis of abscissa indicates an elapsed time. A field interval of an input signal is equal to 1/50 second in the PAL or PALplus system. A double speed field interval of the signal read out from the field memory FM1 is equal to 1/100 second. As shown in Fig. 5, the memory managing unit 56 controls the writing and reading operations of the field memories FM1, FM2, and FM3.

Fig. 5A shows the writing and reading operations of the field memory FM1. A broken line indicates the writing operation to the memory FM1 and a solid line shows the reading operation. In this example, a picture plane is magnified to 4/3 times in the vertical direction. Since the writing operation is performed to only the actually necessary portion, only a part in the 1-field interval is written into the memory. The necessary portion is, for example, the main picture portion of a letter box format. On the other hand, the reading operation is executed twice for a 1-field period of time. Thus, the line number conversion for converting the aspect ratio and the field double speed process are simultaneously performed.

Fig. 5B shows the reading operation from the field memory FM2. The image of the latter half in the image that is read out twice from the field memory FM1 is written into the field memory FM2 and the image is read out twice from the next field. Similarly, as shown in Fig. 5C, the image of the latter half in the image that is read out twice from the field memory FM2 is written into the field memory FM3 and the image is read cut twice from the next field.

As shown in Fig. 5, the output of the noise reducer 51 (field memory FM1), the output of the field memory FM2, and the output of the field memory FM3 are supplied to the line interpolation logic 52. The line interpolating process is executed by using the video signals of two fields in the same frame. That is, in the first field #1 and the second field #2 shown in Fig. 5, the line interpolating process is executed by using the output of the field memory FM1 (actually, the output of the noise reducer 51) and the output of the field memory FM2. In the third field #3 and the fourth field #4, the line interpolating process is performed by using the output of the field memory FM2 and the output of the field memory FM3. The signal to be used is shown by being surrounded by a broken line in Fig. 5.

On the basis of the foregoing relation, in the switching circuit 79 of the line interpolation logic 52 shown in Fig. 3, an input terminal (a) is selected in the first and second fields and an input terminal (b) is selected in the third and fourth fields. An output of the adder 72 in which the output of the field memory FM1 and an intrafield interpolation output (interpolation output formed from the output of the field memory FM2) are mixed is supplied to the input terminal (a). The output of the adder 72 in which the output of the field memory FM3 and an intrafield interpolation output (interpolation output formed from the output of the field memory FM2) are mixed is supplied to the input terminal (b). Further, the switching circuit 73 is switched in correspondence to that the input terminals to which the images of the A and B fields are inputted are switched between the first and second fields and the third and fourth fields.

As mentioned above, the even number line and odd number line formed by the line interpolation logic 52 are supplied to the vertical filter 55. Fig. 6 shows the operation of the vertical filter 55. Fig. 6A shows an example of an input to the vertical filter 55 in case of magnifying the image into 4/3 times. In case of Fig. 6A, a dummy line is inserted in both of the even number lines and the odd number lines at a ratio of one dummy line per three even or odd number lines, thereby converting the number of lines. As mentioned above, a vertical filtering process as shown in Fig. 6B is executed to the video signal such that the number of lines is converted and the odd number line "odd" and the even number line "even" are outputted in parallel. That is, the following process is executed every continuous eight lines [odd(n) ~ even(X)], thereby forming a signal of new eight lines.

| | |
|---|---|
| odd(n) | odd(n) x 4/4 |
| even(n) | even(n) x 3/4 + odd(n) x 1/4 |
| odd(n+1) | odd(n+1) x 2/4 + even(n) x 2/4 |
| even(n+1) | even(n+1) x 1/4 + odd(n+1) x 3/4 |
| odd(n+2) | even(n+1) x 4/4 |
| even(n+2) | even(n+1) x 1/4 + odd(n+2) x 3/4 |
| odd(X) | odd(n+2) x 2/4 + even(n+2) x 2/4 |
| even(X) | even(n+2) x 1/4 + odd(n+3) x 3/4 |

By the above process, the signal in which the number of lines was merely converted in the memory is interpolated so as to obtain a natural image. Although the interpolation has been performed by using two lines here, the number of lines and the filter coefficients are shown as an example. As shown in Fig. 6C, the signal of the odd number line is outputted from the vertical filter 55 in the first and third fields and the signal of the even number line is outputted in the second and fourth fields.

According to the first embodiment of the invention mentioned above, in the line interpolation logic 52, the video signal whose speed was doubled is converted into a sequential scan signal in accordance with the motion amount and is further processed by the vertical filter 55. Therefore, as compared with the case of processing the signals of different fields by the median filter, the picture quality can be further improved. In the first embodiment, the total number of field memories which are necessary for the scanning line interpolating process of the luminance signal and the flicker free process is equal to three memories of FM1, FM2, and FM3. In the conventional construction, three field memories are necessary for the scanning line interpolating process of the luminance signal and two field memories are necessary for the flicker free process. Therefore, the number of field memories can be reduced.

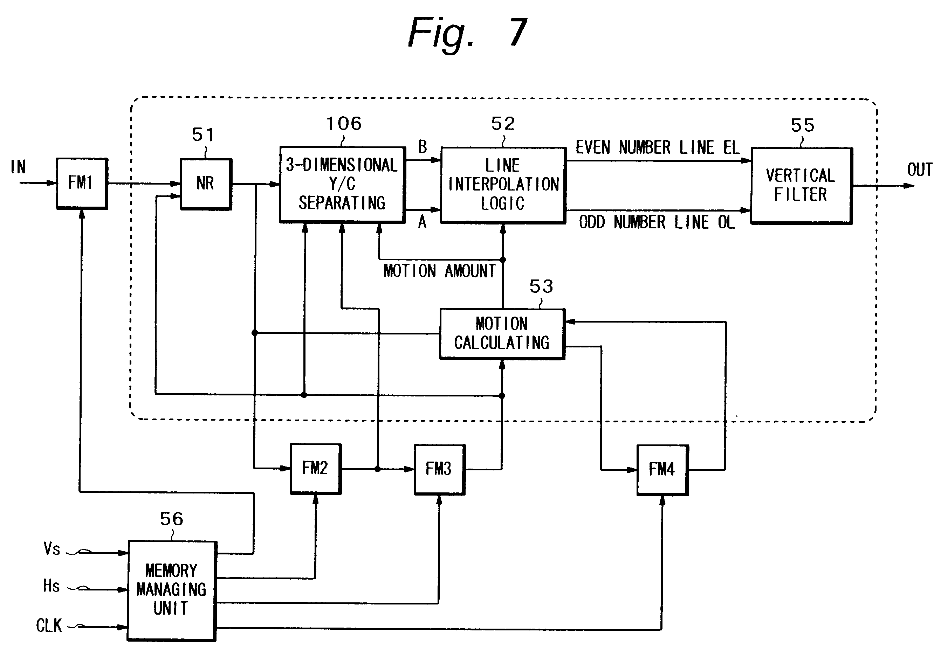

A main section of the signal process in the second embodiment of the invention is now shown in Fig. 7. The second embodiment is characterized in that a 3-dimensional Y/C separation processing unit 106 in which the foregoing color plus process is performed as a basic process is provided at the front stage of the line interpolation logic 52. When comparing with the construction (Fig. 2) of the first embodiment, a 3-dimensional Y/C separation processing unit 106 is provided between the noise reducer 51 and the line interpolation logic 52. The output of the noise reducer 51, the output of the field memory FM2, the output of the field memory FM3, and the motion amount from the motion calculating unit 53 are supplied to the Y/C separation processing unit 106. A signal of the A field and a signal of the B field from the Y/C separation processing unit 106 and the motion amount from the motion calculating unit 53 are supplied to the line interpolation logic 52.

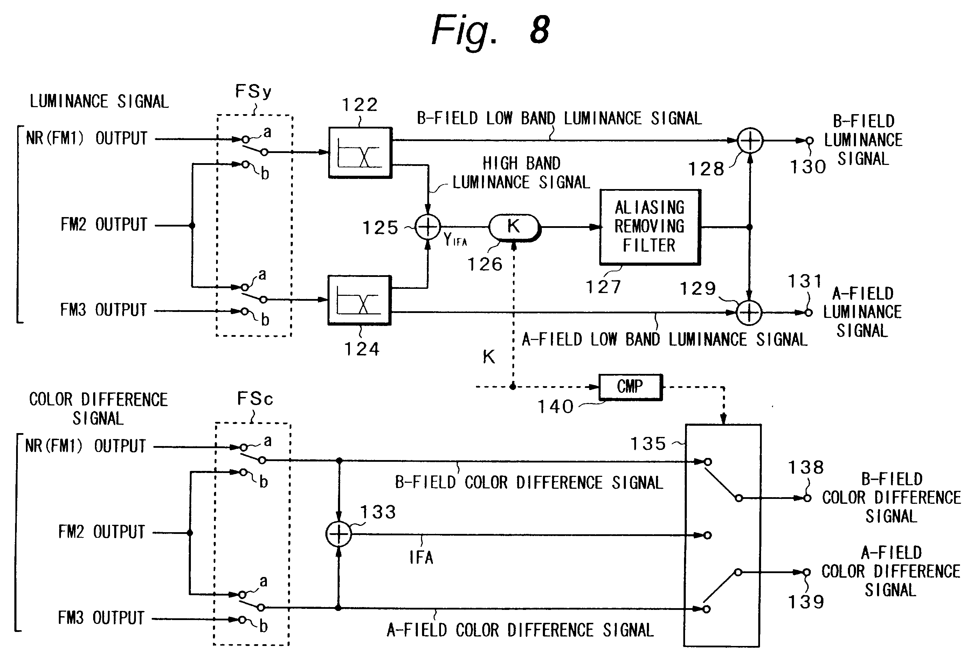

Fig. 8 shows an example of the 3-dimensional Y/C separating unit 106. The 3-dimensional Y/C separation executes the separation of the luminance signal and the chrominance signal by using the correlation between the A field and the B field in the same frame. Since the outputs from the noise reducer (field memory FM1) 51, field memory FM2, and field memory FM3 are outputted with the elapsed times as shown in Fig. 5, the inputs to the 3-dimensional Y/C separation processing unit 106 are selected by field switches FSy and FSc. Outputs of the field switches FSy and FSc are inputted to an A field processing unit and a B field processing unit of each of the luminance signal and the chrominance signal.

As described with reference to Fig. 5, since the outputs of the noise reducer (field memory FM1) 51 and field memory FM2 are used in the first and second fields, each of the field switches FSy and FSc selects an input terminal (a). Since the outputs of the field memories FM2 and FM3 are used in the third and fourth fields, each of the field switches FSy and FSc selects an input terminal (b).

A construction such that the signals are connected to the outputs of the field switches FSy and FSc is similar to that of the 3-dimensional Y/C separation processing unit 6 shown in Fig. 14 mentioned above. With respect to the motion signal, the signal obtained by the motion signal calculating unit 53 is used. A luminance signal processing unit will be first described.

An A field luminance signal and a B field luminance signal which are outputted from the field switch FSy are supplied to band dividing filters 122 and 124. In each of the band dividing filters 122 and 124, the signals are separated into a low frequency region including no chrominance carrier signal and a high frequency region including the chrominance carrier signal.

The high frequency components taken out to outputs of the band dividing filters 122 and 124 are added by an adder 125. The chrominance carrier signals included in the high band of the video signal in each field are mutually set off by such an addition, so that the intraframe average high band luminance signal Y_{IFA} is obtained. This process uses a principle that a correlation between the luminance signals which are away from each other by one field in the same frame is high and phases of the carrier chrominance signals are different by 180° in the PAL system.

In an image having a strong motion, since the nature of the PAL video signal mentioned above is not satisfied, an interference component leaks to a high band luminance component derived by the addition. To make the interference component inconspicuous, the coefficient K is multiplied by a coefficient device 126 in accordance with the motion amount, thereby attenuating the high band luminance component.

The high band luminance component adjusted to an amplitude according to the motion amount by the coefficient device 126 is supplied to an aliasing removing filter 127. The signals of different fields are added by the adder 125, so that a continuity of the oblique line is not smooth. To reduce this problem, the aliasing removing filter 127 is provided.

The high band luminance component from the aliasing removing filter 127 is supplied to adders 128 and 129. The high band luminance component and the A field low band luminance signal from the band dividing filter 122 are added in the adder 128. In the adder 129, the high band luminance component and the B field low band luminance signal from the band dividing filter 124 are added in the adder 29. The luminance signal of the B field is taken out to an output terminal 130 from the adder 128. The luminance signal of the A field is taken out to an output terminal 131 from the adder 129.

The color difference signal UV of each field which is outputted from the field switch FSc is added by an adder 133. The intraframe average color difference signal IFA is derived from the adder 133. By this process, a luminance component mixed to the color difference signal can be eliminated. This process is based on a principle similar to the process for eliminating the carrier chrominance signal from the luminance high band component mentioned above.

When this process is performed in an image of a strong motion, an interference component is generated. Therefore, the motion amount is supplied to a comparing circuit 140, a color difference switching signal according to the motion amount is formed, and a color difference output switch 135 is switched by the switching signal. Thus, the intraframe average color difference signal IFA, the A field color difference signal, and the B field color difference signal are switched in accordance with the motion amount. The A field color difference signal output and the B field color difference signal output are obtained at output terminals 138 and 139, respectively.

In the above description, although the separation based on the color plus process has been used as a 3-dimensional Y/C separation, the invention can be also applied to the whole 3-dimensional Y/C separation using a correlation between the fields.

In a manner similar to the first embodiment, according to the second embodiment of the invention mentioned above, in the line interpolation logic 52, the video signal whose speed was doubled is converted into the sequential scan signal in accordance with the motion amount and is further processed by the vertical filter 55. Therefore, as compared with the case of processing the signals of the different fields by the median filter, the picture quality can be further improved. In a manner similar to the first embodiment, the number of necessary field memories can be reduced.

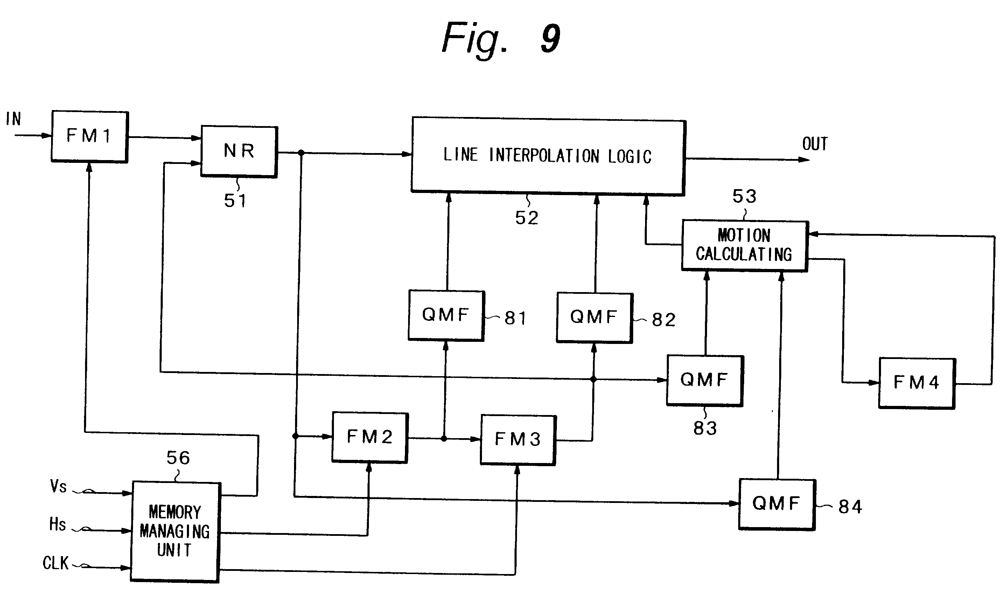

Fig. 9 shows a construction of the third embodiment of the invention. The third embodiment is characterized in that the scanning line interpolating process in the camera mode of the PALplus system is simultaneously executed, and a vertical interpolating filter(QMF) of the PALplus system is provided. In the field memory FM1, a helper interleaving process such that the main picture plane and the vertical reinforcement signal (helper signal) are read out every line in the field memory FM1 at a ratio of (3 : 1) is executed. As for this process, the process is similar to the process of the conventional PALplus system described with reference to Fig. 18.

The output of the field memory FM1 is supplied to the noise reducer 51. The noise reducer 51 has a construction of the frame recursive type. The output of the noise reducer 51 is supplied to a serial connection of the field memories FM2 and FM3. The outputs of the field memories FM2 and FM3 are supplied to QMFs 81, 82, and 83 of the PALplus system, respectively.

The QMFs 81 and 82 execute a scanning line interpolation vertical filtering of the PALplus system. Outputs obtained by performing the filtering processes of the QMFs 81 and 82 to the outputs of the field memories FM2 and FM3 are inputted to the line interpolation logic unit 52. In the camera mode of the PALplus system, since the intrafield process is performed, the scanning line interpolating process has been completed at the stage just after the QMFs 81 and 82.

The signal which is inputted to the motion calculating unit 53 will now be described. The motion detection needs that the frame difference can be calculated by the signals which are away from each other by one frame as mentioned above. However, since the time relation of the helper signals has been changed as will be mentioned later just after the noise reducer 51, it is necessary to eliminate an influence by it. To prevent it, the filtering process by the QMF 84 is executed without using any helper signal. To match the condition with it, the output of the field memory FM3 is supplied to the motion calculating unit 53 through the QMF 83 and a coefficient for the helper is set to 0 in the QMF 83. In many cases, the motion detection is ordinarily performed on the basis of the signal obtained through a low pass filter. According to the third embodiment, since no vertical reinforcement signal is used in the calculation of the motion amount, an effect of the low pass filter can be obtained.

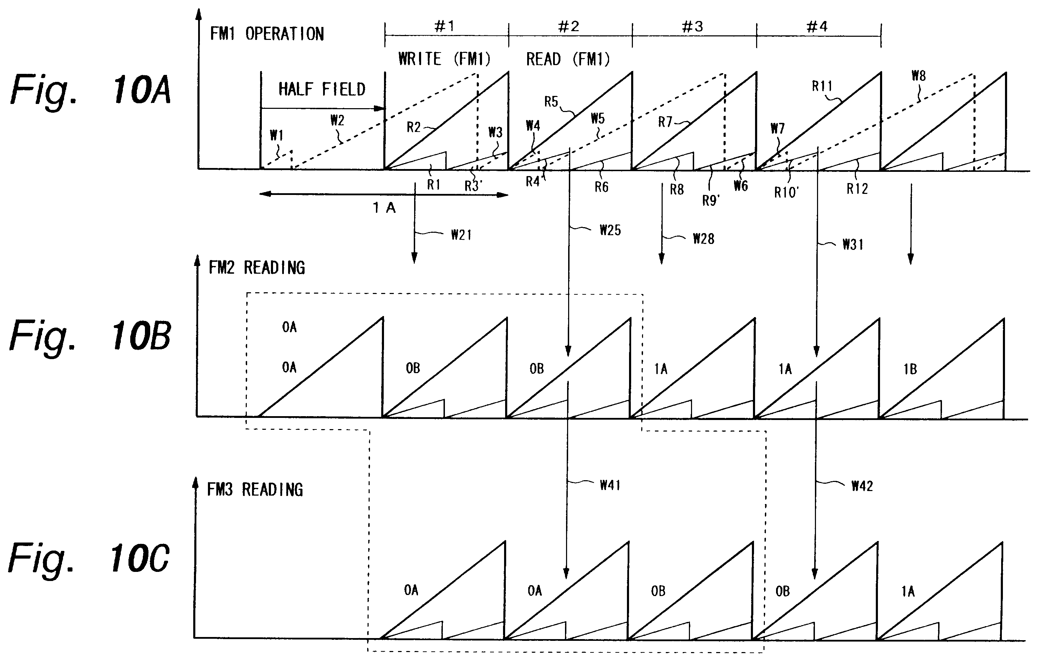

Fig. 10 shows elapsed times of the signals which are inputted to the line interpolation logic unit 52 and motion calculating unit 53. Fig. 10A shows the writing operation (broken line) and reading operation (solid line) of the field memory FM1. Fig. 10B shows the reading operation of the field memory FM2. Fig. 10C shows the reading operation of the field memory FM3. In Figs. 10B and 10C, a portion surrounded by a broken line is used as a signal of each field. That is, the output of the field memory FM2 is outputted as it is for the field (double speed field) #1. In the field #2, the interpolation data from the A field and the signal of the B field are selected or mixed on the basis of the output from the motion calculating unit 53 and outputted. In the field #3, the interpolation data from the B field and the A field video signal are selected or mixed on the basis of the output from the motion calculating unit 53 and outputted. In the field #4, the output from the field memory FM3 is outputted as it is.

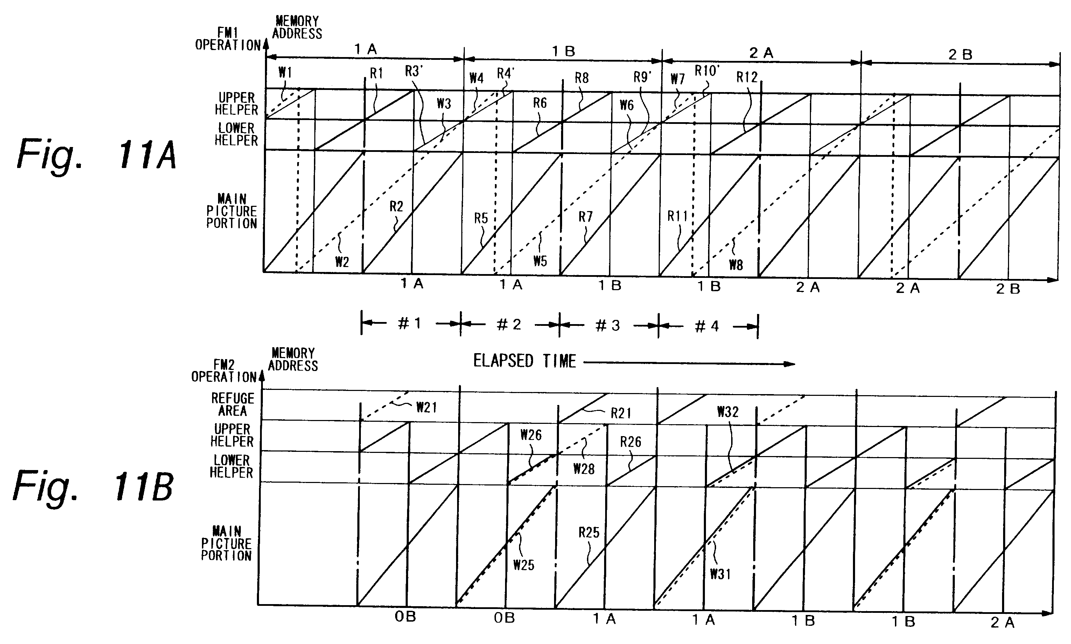

A method of performing the helper interleaving process by using the field memories FM1 and FM2 will now be described with reference to Figs. 10 and 11. Fig. 11 is a timing chart showing a memory control which is carried out to the field memories FM1 and FM2 by the memory managing unit 56. First, the writing operation to the field memory FM1 is performed as shown by oblique broken lines in Figs. 10 and 11. When the written signal is read out as shown by oblique solid lines, a helper interleaving process is executed and, further, the field frequency is doubled.

The writing process to the field memory FM1 will now be described in detail with reference to Fig. 11. Video signals which arrive are sequentially written into the field memory FM1 by writing operations W1, W2, W3, ... as shown below.
- Writing operation W1:: upper helper signal of the field 1A
- Writing operation W2:: main picture portion of the field 1A
- Writing operation W3:: lower helper signal of the field 1A
- Writing operation W4:: upper helper signal of the field 1B
- Writing operation W5:: main picture portion of the field 1B
- Writing operation W6:: lower helper signal of the field 1B
- Writing operation W7:: upper helper signal of the field 2A
- Writing operation W8:: main picture portion of the field 2A

The reading operations R1, R2, ... are executed from the field memory FM1 as shown below. In the reading mode, the interleaving process of the helper signal is executed. It is assumed that the reading operation from the field memory FM1 is performed from the timing that is just the half field after the start of the input to the memory. The reason cf it is to prevent that a disturbance cf a horizontal sync signal which is caused in a VTR signal or the like exerts an influence on the inside of a visible picture plane. The writing operations regarding the signals to be read out are also shown.
- Reading operation R1:: upper helper signal (W1) of the field 1A
- Reading operation R2:: main picture portion (W2) of the field 1A
- Reading operation R3':: lower helper signal of the field 0B
- Reading operation R4':: upper helper signal (W4) of the field 1B
- Reading operation R5:: main picture portion (W2) of the field 1A
- Reading operation R6:: lower helper signal (W3) of the field 1A
- Reading operation R7:: main picture portion (W5) of the field 1B
- Reading operation R8:: upper helper signal (W4) of the field 1B
- Reading operation R9':: lower helper signal (W3) of the field 1A
- Reading operation R10':: upper helper signal (W7) of the field 2A
- Reading operation R11:: main picture portion (W5) of the field 1B
- Reading operation R12:: lower helper signal (W6) of the field 1B

As will be understood from the writing and reading operations of the field memory FM1 mentioned above, the video signal of the main picture portion is continuously read out twice at a double speed from the field memory FM1 and is subjected to the double speed process of the field. However, as shown by thin solid lines in Fig. 11A, since the reading operation R3' is performed before the lower helper signal of the field 1A is written by the writing operation W3, an inconvenience such that the lower helper signal of the previous field 0B is read out occurs. Since the reading operation R4' is executed after the writing operation W4, an inconvenience such that the upper helper signal of the next field 1B is read out occurs. Even in the reading operations R9' and R10', a problem such that the helper signal necessary for the interleaving process is not read out similarly occurs. As mentioned above, in the reading operation of the field memory FM1 of the second time, the proper interleaving process is not executed. The output video signal of the field memory FM1 cannot be used as it is for the vertical interpolating process.

It is corrected by using the field memory FM2. A refuge area other than the areas in which the main picture portion, upper helper signal, and lower helper signal are respectively written is provided in the field memory FM2 as shown in Fig. 11B.

Fig. 10B shows the reading operation of the field memory FM2. Fig. 11B shows the writing and reading operations of the field memory FM2. The process to solve the foregoing problems is executed at a period of four fields (#1 to #4) of the double fields as will be explained hereinlater.

Process in the reading operation (#1) of the first time of the field 1A:

The upper helper signal of the field 1A which is outputted by the reading operation R1 is written into the refuge area specially prepared in the field memory FM2 (writing process W21). The reading operation of the first time of the upper helper signal, the main picture portion, and the lower helper signal of the previous field 0B is executed from the field memory FM2.

Process by the reading operation (#2) of the second time of the field 1A:

The upper helper signal of the field 1B which is outputted by the reading operation R4' is not written into the field memory FM2. The main picture portion of the field 1A which is outputted by the reading operation R5 is written into the field FM2 (writing operation W25). The lower helper signal of the field 1A which is outputted by the reading operation R6 is written into the field FM2 (writing operation W26). The reading operation of the second time of the upper helper signal of the previous field 0B, the main picture portion, and the lower helper signal is performed from the field memory FM2.

Process in the reading operation (#3) of the first time of the field 1B:

The upper helper signal of the field 1B which is outputted by the reading operation R8 is written into the field memory FM2 (writing operation W28). The other operations are not executed. The upper helper signal of the field 1A is read out from the refuge area in the field memory FM2 (reading operation R21). The signal of the main picture portion is read out from the area of the main picture portion in the field memory FM2 (reading operation R25). The lower helper signal is read out from the area of the lower helper signal in the field memory FM2 (reading operation R26).
Therefore, the proper interleaving process is executed.

Process in the reading operation (#4) of the second time of the field 1B:

The signal of the main picture portion of the field 1B which is outputted by the reading operation R11 is written into the area of the main picture portion in the field memory FM2 (writing operation W31). The lower helper signal of the field 1B which is outputted by the reading operation R12 is written into the area of the lower helper signal in the field memory FM2 (writing cperation W32). The upper helper signal of the field 1A is read out from the refuge area in the field memory FM3, the signal of the main picture portion is read out from the area of the main picture portion in the field memory FM2, and the lower helper signal is read out from the area of the lower helper signal in the field memory FM2. Therefore, the correspondence of the time of the main picture portion and the helper is correct and the proper interleaving process is executed.

The processes of #1 to #4 mentioned above are repeated. The video signal which was subjected to the field double speed and the interleaving process and was read out from the field memory FM2 is supplied to the field memory FM3. The signal which is read out at the second time from the field memory FM2 is written into the field memory FM3. In Fig. 10C, the signal of the field 0B that is read out at the second time is written into the field memory FM3 by the writing operation shown at W41. The signal of the field 1A which is read out at the second time is written into the field memory FM3 by the writing operation shown at W42. The written signal is continuously read out twice from the next double speed field.

In the third embodiment of the invention mentioned above, the total number of field memories which are necessary for the interleaving process of the helper signal and the flicker free process is equal to three memories of FM1, FM2, and FM3. In the conventional construction, three field memories are necessary for the interleaving process and two field memories are necessary for the flicker free process. Thus, the number of field memories can be reduced from 5 to 3.

The invention is not limited to the foregoing embodiments but various embodiments can be used. For example, in the third embodiment, the 3-dimensional Y/C separation processing unit can be also provided between the noise reducer 51 and the line interpolation logic 52. Although the television receivers of the PAL system and the PALplus system have been described above, the invention can be also applied to a television receiver which can be used for both of the SECAM system and the PAL-SECAM system. Although the television receiver has been described above as an example of the video signal processing apparatus, the invention can be also applied to the other AV equipment such as video equipment, recording medium integrated type monitor apparatus, projector apparatus, and the like. Further, it will be obviously understood that the invention can be developed to various forms without being limited to the embodiments shown above.

According to the PAL system television receiver of the invention as described above, the problems on the picture quality of the flicker free process by the conventional median filter can be solved. The field memories which are used in the flicker free process can be effectively used and the 3-dimensional Y/C separation can be performed. Further, the process of the vertical reinforcement signal of the PALplus system and the flicker free process which have conventionally separately been processed are commonly constructed and can be rationally managed. The system can be efficiently operated and the number of field memories to be used can be reduced.

Having described specific preferred embodiments of the present invention with reference to the accompanying drawings, it is to be understood that the invention is not limited to those precise embodiments, and that various changes and modifications may be effected therein by one skilled in the art without departing from the scope or the spirit of the invention as defined in the appended claims.

## Claims

1. A video signal processing apparatus for converting an inputted video signal of an interlace system to a signal of a double field frequency and performing a scanning line number conversion, comprising:
memory means which stores said inputted video signal of the interlace system and from which the video signal is read out at a double field frequency;
motion detecting means for calculating a motion amount of an image every pixel on the basis of a difference in one frame of said inputted video signal of the interlace system; and
line interpolating means for forming a video signal of an interpolation line at an intermediate position between two scanning lines of said video signal of the interlace system converted to said double field frequency signal with reference to said calculated motion amount and converting the video signal of the interlace system to a sequential scanning signal,
wherein an even-number line and an odd-number line are outputted every field of said double field frequency on the basis of said line-interpolated sequential scanning signal.

2. An apparatus according to claim 1, further comprising:
vertical filtering means for performing a vertical filtering process to the video signal which is outputted from said line interpolating means,
and wherein said vertical filtering means outputs an even-number line and an odd-number line every field of said double field frequency on the basis of the sequential scanning signal which was subjected to the vertical filtering process.

3. An apparatus according to claim 1 or 2, further comprising:
a noise reducer processing unit for performing a noise reducing process of a field or frame recursive type to the output from said memory means,
and wherein an output of said noise reducer processing unit is supplied to said motion detecting means and said line interpolating means.

4. An apparatus according to claim 1, 2 or 3, further comprising:
means for delaying said calculated motion amount by a time corresponding to one field and performing a time filtering process to a calculation result of said motion amount.

5. An apparatus according to any one of claims 1 to 4, further comprising:
first delay means for delaying an output from said memory means by a time corresponding to one field in a double-speed field; and
second delay means for further delaying an output from said first delay means by a time corresponding to one field in said double-speed field,
and wherein said motion detecting means calculates said motion amount with reference to the output from said memory means and an output from said second delay means.

6. An apparatus according to claim 5, wherein a 3-dimensional Y/C separation using a correlation between fields by using the output from said memory means and the outputs from said first and second delay means.

7. An apparatus according to claim 5 or 6, wherein
said memory means executes an interleaving process of a helper signal included in a television signal of a PALplus system, and
said apparatus further comprises vertical filtering means for performing a vertical filtering process to signals which are outputted from said first and second delay means.

8. An apparatus according to claim 7, further comprising:
vertical filtering means for motion detection for executing a vertical filtering process without being influenced by said helper signal subjected to said interleaving process,
and wherein said motion detecting means calculates said motion amount on the basis of an output from said vertical filtering means for motion detection.

9. An apparatus according to claim 2, 7 or 8, wherein
said motion detecting means, said line interpolating means, and said vertical filtering means are realized by a DSP (digital signal processor).

10. A video signal processing method of converting an inputted video signal of an interlace system to a signal of a double field frequency and performing a scanning line number conversion, comprising the steps of:
converting said inputted video signal of the interlace system to a video signal of a double field frequency;
calculating a motion amount of an image every pixel on the basis of a difference in one field of said video signal converted to the signal of said double field frequency; and
converting the video signal of the interlace system to a sequential scanning signal by forming an interpolation line at an intermediate position of two scanning lines of said video signal of the interlace system converted to the signal of said double field frequency with reference to said calculated motion amount,
wherein an even-number line and an odd-number line are outputted every field of said double field frequency on the basis of said line-interpolated sequential scanning signal.
